# EUROPEAN PATENT APPLICATION

(11) **EP 4 261 506 A1**
(43) Date of publication of application: **18.10.2023**
(21) Application number: 22167959.0
(22) Date of filing: 12.04.2022
(51) Int. Cl.: G01J 3/453, G01J 3/02, G02B 6/42

(54) **COMPONENT FOR BUILDING A MINIATURIZED SPECTROMETER AND METHOD FOR USING IT**

(71) Applicant: Eidgenössische Materialprüfungs- und Forschungsanstalt, 8600 Dübendorf (CH)
(72) Inventor: GROTEVENT, Matthias Jonas, 25469 Halstenbek (DE); SHORUBALKO, Ivan, 8052 Zürich (CH); KOVALENKO, Maksym, 8006 Zürich (CH)
(74) Representative: Keller Schneider Patent- und Markenanwälte AG

(57) **Abstract**

The invention relates to a component (1) for building a miniaturized spectrometer (2) comprising a substrate (3) elongating in x-, y- and z-direction with a top surface (4) in an x-y plane, whereas an optical waveguide (5) is formed within the substrate (3) along the x-direction below the top surface (4), reaching into the top surface (4) having two end faces (6) at opposed front and back surfaces at y-z planes of the substrate (3). The component (1) comprises at least one first photodetector (7) on the top surface (4) optically coupled with the waveguide (5) which is stacked in height. It comprises a first lower electrode (8) and a corresponding first upper electrode (9) spaced apart from the first lower electrode (8) in z-direction. Both electrodes (8, 9) are electrically conductive and elongate in y-direction crossing the waveguide (5). The first lower electrode (8) has an active area (10) exposed to the waveguide (5) with a length (1) smaller than the shortest wavelength (λ) to be measured, preferably shorter than a quarter of the shortest wavelength (λ) to be measured. A first quantum dot layer (11) is arranged between the first lower electrode (8) and the first upper electrode (9) having a height (h) less than 2 µm, preferably less than 0.5 µm. The invention also relates to a method of using such a component (1) as a spectrometer (2).

## Description

### TECHNICAL FIELD

The invention relates to a component for building a miniaturized spectrometer comprising a substrate elongating in x-, y- and z-direction. It has a top surface in an x-y plane, whereas an optical waveguide is formed within the substrate along the x-direction below the top surface, reaching into the top surface and having two end faces at or near opposed front and back surfaces at y-z planes of the substrate. The component further comprises at least one first photodetector on the top surface optically coupled with the waveguide.

### STATE OF THE ART

Fourier transform infrared spectrometers are widely used in laboratories for identifying among others molecules, like counterfeit medication, air and water quality, or contaminations in food. For this, high spectral resolution and large bandwidth are needed in the infrared light region, ideally up to a wavelength of 15 µm. Current commercial Michelson Fourier-transform spectrometers are best-suited, but are of desktop computer size, rely on external imaging systems and cost tens of thousands of Swiss Francs. From the spectrometer concepts currently available, waveguide spectrometers are best-suited to overcome the compromise between spectral resolution and bandwidth, and the limitation to the visible range.

Overcoming the cost and size barrier would make this analytical tool available to a broad public and would enable individuals to perform checks currently reserved to expensive laboratory testing.

WO 2018/011035 A1 discloses a waveguide imaging spectrometer comprising a substrate layer with a surface waveguide extending from an inlet face proceeding partly through the substrate layer to a reflecting element, wherein a multiplicity of photo detectors is arranged on a top side of the substrate layer facing the surface waveguide. The photo detectors are sheet-like in-print graphene structures distributed at the top side at least partly overlapping the waveguide with printed electrical conductors. They allow out-coupling of evanescent fields from the waveguide at their positions and work based on the photo-effect in graphene.

### DESCRIPTION OF THE INVENTION

The object of this invention is to describe an alternative component for a miniaturized spectrometer, allowing even smaller dimensions as described initially, whereas high spectral resolution such as 50 cm⁻¹ and large bandwidth can be detected from the UV region up to the infrared light region starting from 400 nm up to a wavelength λ of 2 µm, ideally up to 15 µm. Further, a method of use of such a component shall be described. In the description of this invention, all "lengths" expand in x-, all "widths" in y- and all "heights" in z-direction.

Solutions to these objects are presented by the features in the according independent claims. According to the invention, the first photodetector is stacked in height and comprises a first lower electrode and a corresponding first upper electrode spaced apart from the first lower electrode in z-direction. Both electrodes are electrically conductive and elongate in y-direction crossing the waveguide. The first lower electrode has an active area exposed to the waveguide with a length smaller than the shortest wavelength λ to be measured, preferably shorter than a quarter of the shortest wavelength to be measured. A first quantum dot (QD) layer is arranged between the first lower electrode and the first upper electrode having a height less than 2 µm, preferably less than 0.5 µm.

The Method of using a component according to the invention as a spectrometer is characterized by the following steps:
a) generating standing optical waves in the optical waveguide by coupling identical light beams into both opposed end faces of the waveguide, preferably by a waveguide-based beam splitter, or by reflecting a light beam at or near an end face by a mirror back into the waveguide;
b) measuring the intensity of the photo signal along a plurality of periods of the resulting interferogram,
   1. preferably by using a plurality of photodetectors placed on the top surface and being optically coupled with the waveguide, or
   2. by the first photodetector on the top surface optically coupled with the waveguide, while the interferogram is shifted within the waveguide due to a phase shift of at least one of the light beams entering the waveguide, such as by phase shifting one or both of the incoming waves into the waveguide or by displacing the mirror;
c) performing a Fourier transformation of the detected intensity of the photo signal;
d) receiving the different light intensities (arbitrary units, a.u.) as a function of the wavenumbers given in cm⁻¹;
e) and optionally selecting the peak positions and comparing the according wavenumbers to data stored in a database.

In contrast to prior art photodetectors, the present photodetector comprises stacked electrodes separated by a QD layer. The coupling with the waveguide leads to a scattering of photons at the lower electrode. Scattered photons are absorbed in the QD layer which subsequently generates charge carriers (electrons and/or holes). In other words, the charge-carriers are generated in the vicinity of the electrode within the QD layer. The charge carriers then travel through the QD layer to the upper and lower electrodes. No photon needs to pass the electrode or the QD layer and travel to the upper electrode. The lower electrode is both, a scattering layer as well as a conductive electrode. The QD layer, a semiconductor film between the electrodes, does not need to be transparent to photons, it is only passed by charge carriers. The amount of charge carriers emitted at one particular detector is proportional to the amplitude of the standing wave generated in the waveguide at the location of the electrode, i.e. the photodetector measures the local intensity of the standing wave.

With a lower electrode having a length of 50 nm, wavelengths down to about 200 nm can be measured, which is in the ultraviolet range. The optical coupling of the lower electrode with the waveguide leads to the extraction of a fraction of the light intensity by scattering while a plasmonic interaction of the electrode with the optical light guided by the waveguide can increase the photodetector efficiency. The extracted light from the waveguide interacts with the semiconducting QD layer leading to the formation of electron-hole pairs. The charge carriers may be separated by an optional electrical field applied between the lower and upper electrode for the operation in a photoconductor mode. Alternatively, a built-in electric field can be utilized by generating a potential difference at at least one interface, for example, at the electrode/QD interfaces, or within the QD layer with a changing potential in z-direction (homojunctions or heterojunctions), this allows the detectors to be used as photodiodes operating in a photovoltaic mode. As the charge carriers are separated within the QD layer according to their charge sign (positive or negative), an electrical current is flowing between the electrodes. The energy gap between the QD valence and conduction levels needs to be of lower energy than the photon energy of the longest wavelength to be measured. Therefore, the QD layer cannot be fully transparent for any wavelength intended to be measured.

The presented spectrometer can be as little as 100µm×100µm×100µm with a spectral resolution of 50 cm⁻¹. The subwavelength QD photodetector is, so far, sensitive up to a wavelength λ of 2 µm-but can likely be extended up to 6 µm or further. The spectrometer operates at room temperature and is CMOS fabrication compatible. The starting materials, QD synthesis and device fabrication are likely of low cost.

This ultra-compact spectrometer combines high spectral resolution and wide optical bandwidth at small spectrometer dimensions and may be of interest, among others, for consumer electronics, space applications, and hyperspectral cameras.

The development of such miniaturized, cost-effective, yet high-quality infrared spectrometers can be integrated in consumer electronics such as smart phones. Overcoming the cost and size barrier makes such spectrometers available to a broad public and enables individuals to perform checks currently reserved to expensive laboratory testing.

### BRIEF DESCRIPTION OF THE DRAWINGS

The invention is further described in more details in conjunction with the attached drawings, whereas
- Fig. 1a, b, c: shows a simple component according to the invention, (a) in perspective view, (b) in an y-z plane at the location of the photodetector, (c) in a section of the x-z plane within the waveguide;
- Fig. 2: shows a principle of a measurement setup comprising a component according to the invention in use with a movable mirror;
- Fig. 3a, b, c: show measurement results achieved with the measurement setup according to Fig. 2; (a) in function of a mirror displacement; (b) in function of a mirror displacement, zoomed, in a small displacement range; (c), after Fourier-transformation of the measurement data according to Fig. 3a: intensity as a function of wavenumbers;
- Fig. 4a, b: show an alternative component according to the invention with a plurality of photodetectors arranged parallel in a high density, (a) in perspective view, (b) in a section of the x-z plane within the waveguide;
- Fig. 5a, b, c: show further components according to the invention, alternative to Fig. 4 in a section of the x-z plane within the waveguide, (a) with a rectification layer between the quantum dot layer and the upper electrode, (b) like (a), but further with a dielectric material separating the plurality of single stacks of photodetectors; (c) like (b), whereas two or more upper electrodes are combined to one larger upper electrode;
- Fig. 6a, b, c, d: show top views to the x-y surface of the component, showing the upper electrodes and a standing wave in the waveguide; (a) with photodetectors in high density and a mirror; (b) with photodetectors in in low density and a mirror; (c) with photodetectors in high density with phase modulators on both sides of the waveguide; (d) with photodetectors in in low density and phase modulators on both sides of the waveguide.

### DESCRIPTION

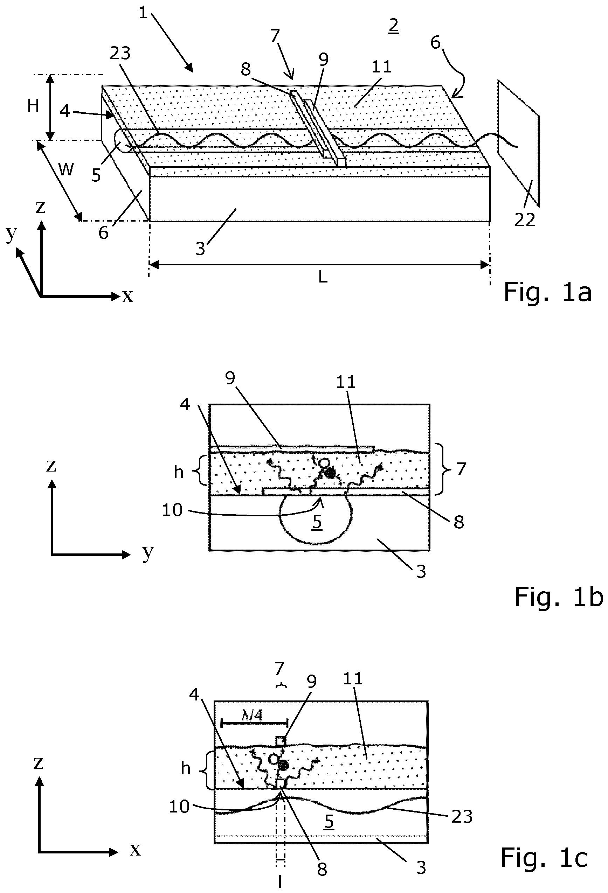

Fig. 1a shows a component 1 for building a miniaturised spectrometer 2 according to the invention in a simple version. The component 1 comprises a substrate 3 elongating in x-, y- and z-direction, whereas all lengths expand in x-, all widths in y- and all heights in z-direction. The substrate 3 has a top surface 4 in an x-y plane, whereas an optical waveguide 5 is formed within the substrate 3 along the x-direction below the top surface 4, reaching into the top surface 4. The optical waveguide 5 differs from the rest of the substrate 3 by its refractive index. It has two end faces 6 at opposed front and back surfaces at y-z planes of the substrate 3, comprising the begin or the end of the waveguide 5.

The component 1 further comprises at least one first photodetector 7 on the top surface 4 which is optically coupled with the waveguide 5.

According to the invention, the first photodetector 7 is stacked in height and comprises a first lower electrode 8 and a corresponding first upper electrode 9 spaced apart from the first lower electrode 8 in z-direction. Both electrodes 8, 9 are electrically conductive and elongate in y-direction crossing the waveguide 5. The first lower electrode 8 has an active area 10 exposed to the waveguide with a length 1 smaller than the shortest wavelength λ to be measured, preferably shorter than a quarter of the shortest wavelength to be measured. A first quantum dot layer 11 is arranged between the first lower electrode 8 and the first upper electrode 9 having a height less than 2 µm, preferably less than 0.5 µm.

To build a spectrometer 2, the first lower and upper electrodes 8, 9 of the first photodetector 7 need to be electrically connected to an analyzing instrument. As soon as a standing wave 23 is generated in the waveguide 5, the first photodetector 7 measures the relative amplitude of the standing wave 23 at the particular place it is set within the component 1. A standing wave can for example be created by leading an optical wave 23 at one face end 6 in the waveguide 5 and reflecting it near the opposite face end 6 by a mirror 22. By displacing the mirror 22, the standing wave 23 is shifted along x-direction. As a result, the first photodetector 7 detects the variation of the amplitude of the shifted standing wave 23 at the position of the first photodetector 7. A Fourier transformation of the detected amplitudes leads to the spectral composition of the standing wave 23 within the optical waveguide 5. In the special case of a monochrome wave 23, its wavelength λ can be determined by identification of the maxima of the standing wave 23.

Instead of using a mirror 22, the light wave 23 can be split and guided to the waveguide 5 at both end faces 6 simultaneously, to generate a standing wave in the waveguide 5. A phase modulator, e.g. a Mach Zehnder modulator or phase shifter outside one or both of the end faces 6 also results in a shifting of the standing wave 23 inside the waveguide 5.

Fig. 1b and 1c show sections of the component 1. In Fig. 1b, a view in the y-z plane at the place of the first photodetector 7 is shown, while in Fig. 1c, a view in an x-z plane is shown, along the center of the waveguide 5. They show the first lower and upper electrodes 8, 9 and the first quantum dot (QD) Layer 11, between them. While the active area 10 fully crosses the waveguide 5 in y-direction which has a width of about 30-50 µm, the active area 10 is very narrow in length, about 50 nm, in x-direction, as shown in Fig. 1c. The first upper electrode 9 overlaps the first lower electrode 8 at least in the area of the waveguide 5. For example, the overlapping area can be 70 µm wide.

Since the first photodetector 7 is stacked, its length is the smallest possible, as narrow as the length of the first lower electrode 8. This electrode is scattering light into the QD layer, subsequently converted into charge carriers, which eventually arrive at the first upper electrode 9. One of the electrodes is grounded, e.g. the first upper electrode 9, so that at the other, e.g. the first lower electrode 8, a current can be measured and analyzed. The black and white dots in Fig. 1b and 1c imply electrons and holes in the first QD layer 10, which are emitted under illumination and result in the photocurrent.

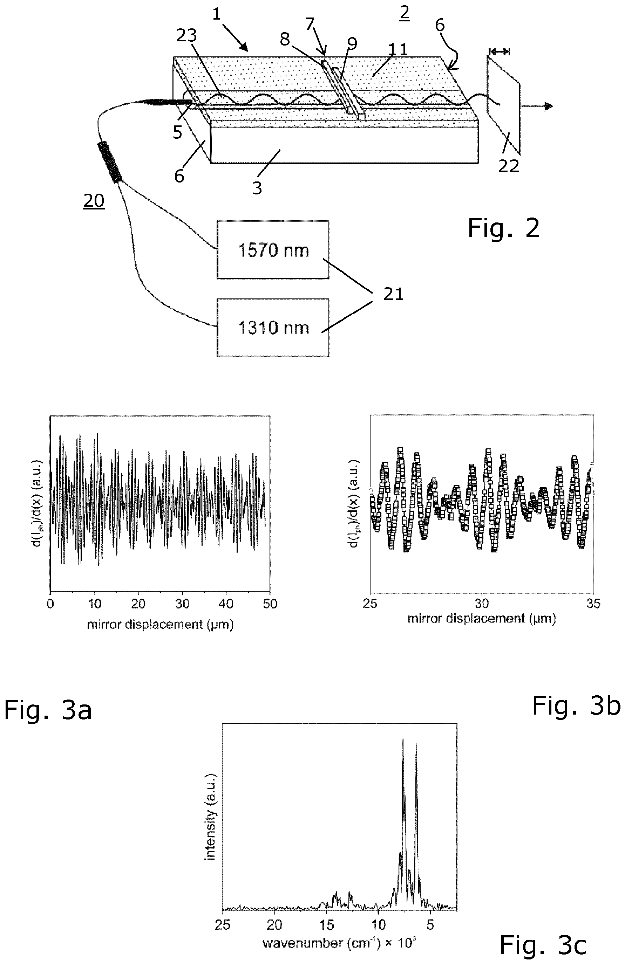

Fig. 2 shows a measurement setup 20, which was used for a proof of concept. It comprises a spectrometer 2 with the component 1 of Fig. 1 and with a mirror 22, whereas a standing wave 23 is generated within the waveguide 5, fed by two different lasers light sources 21 coupled simultaneously. They emit light of 1570 nm, 300 µW, and 1310 nm, 330 µW. The electric connections to the electrodes 8, 9 are not shown. The mirror 22 is movable up to 50 µm along the x-axis.

Fig. 3a shows the amplitude of the standing wave measured in function of the displacement of the mirror 22, from 0 to 50 µm. The section with a displacement between 25 and 35 µm is shown in more detail in Fig. 3b. Here, every single measurement point is given with s small square. A graph of a Fourier transformation of this measured signal is shown in Fig. 3c. The graph shows intensity (a.u.) in function of the wavenumber in cm⁻¹ × 10³. The two peaks correspond to 1302 nm (left) and 1575 nm (right), which differs only by a few nm to the known laser light emitted. This experiment was done as a proof of concept.

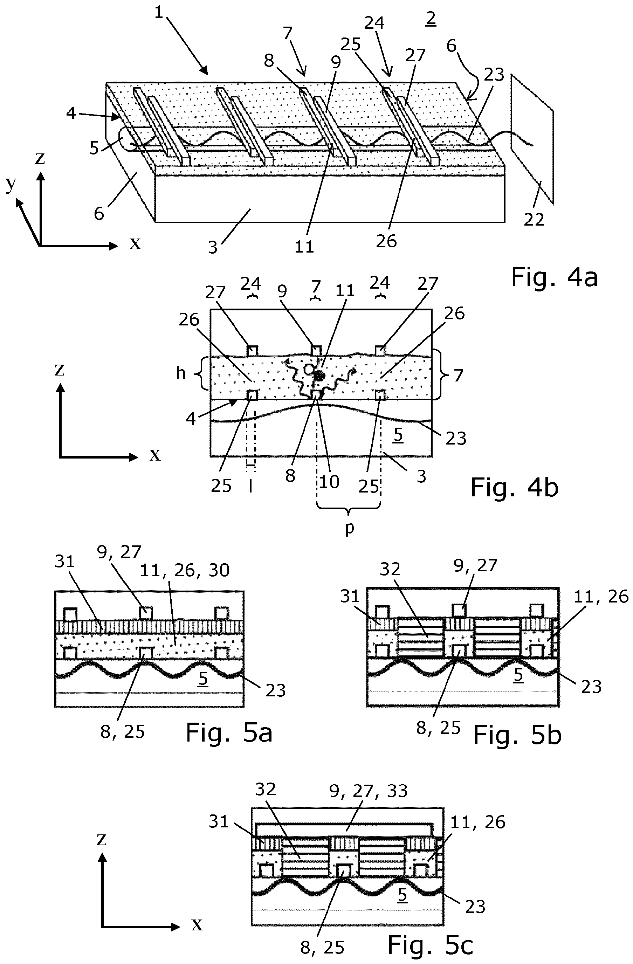

Fig. 4 shows a further embodiment of the invention. To improve the component 1, a plurality of further photodetectors 24 are arranged parallel to the first photodetector 7 on the top surface 4 optically coupled with the waveguide 5, whereas each further photodetector 24 is stacked equally as the first photodetector 7 comprising further lower electrodes 25, further quantum dot layers 26 and further upper electrodes 27. A section in an x-z plane within the waveguide 5 is displayed in Fig. 4b. Three pairs of first and/or second photodetectors 7, 24 are displayed. In this embodiment, the first quantum dot layer 11 and the further quantum dot layers 26 extend across adjacent detectors 7, 24 to build one combined single quantum dot layer 30.

All first and further photodetectors 7, 24 are equidistant to their neighboring photodetectors 7, 24, whereas the spatial periodicity p of the equally spaced photodetectors 7, 24 is preferably equal or shorter than a quarter of the shortest wavelength λ to be measured.

In all embodiments, the first and all further lower electrodes 8, 25 are metal- or transparent conducting oxide electrodes, and/or the first and all further upper electrodes 9, 27 are metal-, transparent conducting oxide-, graphene-, bilayer graphene, or graphene like derivative electrodes.

Fig. 5 shows further variations of the component 1. In Fig. 5a, a rectification layer 31 is placed in z-direction adjacent to the first and all further quantum dot layers 11, 26 or one combined single quantum dot layer 30. This allows a measurement without applying a voltage between the lower and upper first and further electrodes 8, 9, 25, 27.

In Fig 5b, the first and all further quantum dot layers 11, 26 are distant from each other separated by a dielectric material 32. This version reduces the amount of the quantum dot material and can be applied to a component with or without a rectification layer 31.

As shown in Fig. 5c, the first upper electrode 9 and some further upper electrodes 27 may be combined to build one single upper electrode or few upper group electrodes 33, preferably being electrically grounded, while the first lower electrode 8 and all further lower electrodes 25 are measuring electrodes for individual measurements. Again, the combination of upper electrodes may be applied to a component according to Fig. 4, 5a or 5b.

Generally, all quantum dot layers 11, 26, 30 are preferably colloidal quantum dots, preferably comprising mainly of one of the materials PbS, PbSe, PbTe, HgSe, HgTe, SnTe, or InSb. As substrate 3, LiNbO₃ can be used.

The total length L of the substrate 3 including all photodetectors 7, 24 may be less than 2 mm, preferably less than 1mm, and can even be as small as 100 µm. The total width W of the substrate 3 including the optical waveguide 5, and the total height H of the component including the substrate 3 and the photodetectors 7, 24 may each measure not more than 100 µm. The longer the spectrometer 2 is, the higher its resolution becomes. Often, there is enough room for a spectrometer 2 with a length of 1 to 2 mm.

Therefore, the present invention describes a miniaturized subwavelength component for a spectrometer which can be produced at low cost and can be built in a small hand held device, such as a smart phone.

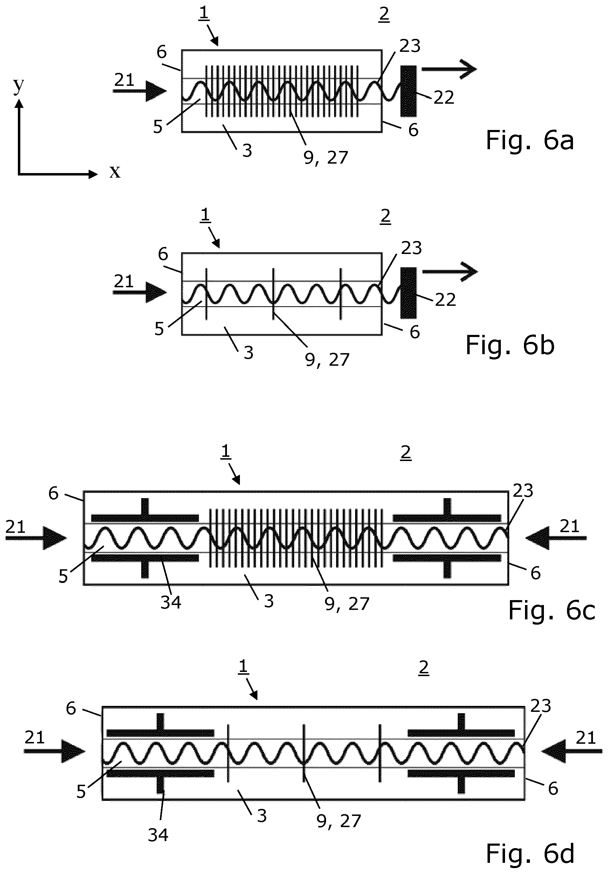

In Fig. 6 shows two different top views to the x-y surface of the component 1, whereas the upper electrodes 9, 27 and a standing wave 23 in the waveguide 5 are illustrated. In Fig. 6a and 6b the position of the standing wave 23 can be shifted by a moving mirror 22, whereas in Fig. 6c and 6d the standing wave 23 is shifted by a phase modulator 34, which can be on one or on both sides 6 of the waveguide 5. In Fig. 6a and 6c, the photodetectors 7, 24 are arranged in a high density with a small periodicity p, so that the mirror 22 in Fig. 6a and the phase modulator 34 in Fig. 6c are not really needed. The situation is called oversampling, because within every period of a wave with a wavelength λ there are at least four photodetectors 7, 24, preferably five or six.

In the situations shown in Fig. 6b and 6d a situation with undersampling is shown: The periodicity p of the photodetectors 7, 24 is larger than the wavelength λ. In these cases, a feature to shift the standing wave 23 is needed, to be able to analyze the wavelength λ of the incoming light. For a test or calibration situation, a laser 21 is used, whereas in the real measurement situation any kind of light can be used to determine the substance on which the light was reflected.

A method of using a component 1 according to the invention as a spectrometer 2 comprises the following steps:
- generating standing optical waves 23 in the optical waveguide 5 by coupling identical light beams into both opposed end faces 6 of the waveguide 5, preferably by a waveguide-based beam splitter or by reflecting it at an end mirror 22;
- measuring the photo signal along a plurality of periods of the resulting interferogram, preferably by using a plurality of photodetectors 7, 24 placed on the top surface 4 and being optically coupled with the waveguide 5, or by the first photodetector 7 on the top surface 4 optically coupled with the waveguide 5, while the interferogram is shifted within the waveguide 5 due to a phase shift of one of the light beams entering the waveguide 5, such as by a displacement of the mirror 22 or by phase shifting one of the incoming waves 23 into the waveguide 5;
- performing a fast Fourier transformation of the detected photo signal depending on the signal shift on the x-axis, such as caused by the mirror 22 displacement;
- receiving the different light intensities (a.u.) as a function of the wavenumbers given in cm⁻¹;
- and optionally selecting the peak positions and comparing the according wavenumbers to data stored in a database.

Preferably, prior to using the component 1 as a spectrometer 2, a reference measurement of the light source is performed to determine the absolute light intensity for each wavenumber. This can be done with a different or the same spectrometer 2.

The method can be used in a mobile device, preferably a hand held device, such as a mobile phone, for analyzing materials and/or ingredients of a composition.

### METHOD FOR FABRICATION

The component, e.g. as shown in Fig. 1, comprises first lower and upper gold electrodes 8, 9 with a subwavelength dimension in length direction of the waveguide 5. The first electrode 8 was fabricated with standard electron-beam lithography. The QDs were deposited following a standard spincoating deposition protocol. However, it was necessary to develop a new fabrication method for the first upper electrode 9 utilizing a graphene-transfer inspired electron beam resist-transfer circumventing any thermal annealing step of the first QD layer 11. While this transfer of electron beam resist as a workaround was necessary for developing the first proof of concept device, it will not be needed when multiple further photodetectors 24 share one upper group electrode 33 as shown in Fig. 5c

For a proof-of-concept device, a HgTe QD photoconductor-type was chosen as no band alignments of QD layers are required. The photoconductor was fabricated in a vertical-stacked configuration, as typically used for photodiodes, reducing the footprint area of the sensor. In analogy to metal nanoprobes utilized in typical waveguide spectrometers, the first lower electrode 8 in the first photodetector 7 scatters out light from the evanescent field of the stationary wave, i.e. functioning simultaneously as an electrode and light scatterer. Subsequently, the light is partially absorbed in the HgTe QD layer creating photo-induced electron-hole pairs. These charge carriers are separated by an applied electric field resulting in a photocurrent. The total QD photodetector height, including both electrodes, can be below 300 nm. Downscaling of the vertical dimension of the imaging sensor by a factor of 1000 is achieved as compared to state-of-the-art waveguide spectrometers using external InGaAs cameras and appropriate optics. Adding the thickness of the buried waveguide to the QD-photoconductor thickness results in an overall spectrometer device height below 100 µm. With an overlap of the electrodes of 70 µm and a mirror travel range of 100 µm, the resulting dimensions of the ultra-compact spectrometer are below 100 µm×100 µm×100 µm which includes the optical system and the imaging sensor (but excludes the electrical circuit).

### LIST OF REFERENCE NUMERALS

- 1: component
- 2: spectrometer
- 3: substrate
- 4: top surface
- 5: optical waveguide, waveguide
- 6: end face
- 7: first photodetector
- 8: first lower electrode
- 9: first upper electrode
- 10: active area
- 11: first quantum dot layer
- 20: Measurement setup
- 21: Laser
- 22: mirror
- 23: wave, standing wave
- 24: further photodetector
- 25: further lower electrode
- 26: further quantum dot layer
- 27: further upper electrode
- 30: one combined single quantum dot layer
- 31: rectification layer
- 32: dielectric material
- 33: upper group electrode
- 34: phase modulator
- 1: length of active area
- h: height of first quantum dot layer
- p: periodicity of the equally spaced photodetectors
- L: total length of a component
- W: total width of a component
- H: total height of a component
- λ: wavelength

## Claims

1. Component (1) for building a miniaturized spectrometer (2) comprising a substrate (3) elongating in x-, y- and z-direction, whereas all lengths expand in x-, all widths in y- and all heights in z-direction, with a top surface (4) in an x-y plane, whereas an optical waveguide (5) is formed within the substrate (3) along the x-direction below the top surface (4), reaching into the top surface (4) having two end faces (6) at or near opposed front and back surfaces at y-z planes of the substrate (3), and comprising at least one first photodetector (7) on the top surface (4) optically coupled with the waveguide (5),
**characterized in that**
the first photodetector (7) is stacked in height and comprises a first lower electrode (8) and a corresponding first upper electrode (9) spaced apart from the first lower electrode (8) in z-direction, both electrodes (8, 9) are electrically conductive and elongate in y-direction crossing the waveguide (5), the first lower electrode (8) having an active area (10) exposed to the waveguide (5) with a length (1) smaller than the shortest wavelength (λ) to be measured, preferably shorter than a quarter of the shortest wavelength (λ) to be measured, whereas a first quantum dot layer (11) is arranged between the first lower electrode (8) and the first upper electrode (9) having a height (h) less than 2 µm, preferably less than 0.5 µm.

2. Component (1) according to claim 1, **characterized in that** a mirror (22) is at or near one of the end faces (6) of the substrate in an y-z plane in a prolongation of the waveguide able to reflect an incoming wave (23) back into the waveguide (5).

3. Component according to claim 1, **characterized by** a phase modulator (34), preferably by a Mach-Zehnder phase modulator, integrated into the substrate (3) or by a mirror (22) movably mounted along the x-axis, in an y-z plane at a prolongation of the waveguide able to reflect an incoming wave (23) back into the waveguide (5), to enable a phase modulation of a standing wave within the waveguide.

4. Component (1) according to any of the previous claims, **characterized in that** a plurality of further photodetectors (24) are arranged parallel to the first photodetector (7) on the top surface (4) optically coupled with the waveguide (5), whereas each further photodetector (24) is stacked equally as the first photodetector (7) comprising further lower electrodes (25), further quantum dot layers (26) and further upper electrodes (27).

5. Component (1) according to claim 4, **characterized in that** all first and further photodetectors (7, 24) are equidistant to their neighboring photodetectors, whereas the spatial periodicity (p) of the equally spaced photodetectors (7, 24) is preferably equal or shorter than a quarter of the shortest wavelength (λ) to be measured.

6. Component (1) according to claim 4 or 5, **characterized in that** the first quantum dot layer (11) and the further quantum dot layers (26) extend across adjacent photodetectors (7, 24) to build one combined single quantum dot layer (30).

7. Component (1) according to any one of the claims 4 to 6, **characterized in that** the first and all further lower electrodes (8, 25) are metal- or transparent conducting oxide electrodes, and/or the first and all further upper electrodes (9, 27) are metal-, transparent conducting oxide-, graphene-, bilayer graphene, or graphene like derivative electrodes.

8. Component (1) according to any one of the claims 4 to 7, comprising a rectification junction as an additional layer (31) in z-direction adjacent to the first and all further quantum dot layers (11, 26) and to the first and all further upper electrodes (9, 27) creating a homojunction, heterojunction or a Schottky metal-semiconductor junction at the quantum dot-electrode interface.

9. Component (1) according to any one of the claims 4 to 8, **characterized in that** first and all further quantum dot layers (11, 26) are distant from each other separated by a dielectric material (32).

10. Component (1) according to any one of the claims 4 to 9, **characterized in that** the first upper electrode (9) and one or more further upper electrodes (27) are combined to build one upper group electrode (33), preferably being electrically grounded, while the first lower electrode (8) and all further lower electrodes (25) are measuring electrodes for individual measurements.

11. Component (1) according to any of the previous claims, **characterized in that** all quantum dot layers (11, 26, 30) are colloidal quantum dot layers, preferably comprising mainly of one of the materials PbS, PbSe, PbTe, HgSe, HgTe, SnTe, or InSb.

12. Component (1) according to any of the previous claims, **characterized in that** the total length (L) of the substrate (3) including all photodetectors (7, 24) is less than 2 mm preferably less than 1mm, and the total width (W) of the substrate (3) including the optical waveguide (5), and the total height (H) of the component (1) including the substrate (3) and the photodetectors (7, 24) measures each not more than 100 µm.

13. Method of using a component (1) according to any of the previous claims as a spectrometer (2), **characterized in** the following steps:
a) generating standing optical waves (23) in the optical waveguide (5) by coupling identical light beams into both opposed end faces (6) of the waveguide (5), preferably by a waveguide-based beam splitter, or by reflecting a light beam at or near an end face (6) by a mirror (22) back into the waveguide (5);
b) measuring the intensity of the photo signal along a plurality of periods of the resulting interferogram,
i. preferably by using a plurality of photodetectors (7, 24) placed on the top surface (4) and being optically coupled with the waveguide (5), or
ii. by the first photodetector (7) on the top surface (4) optically coupled with the waveguide (5), while the interferogram is shifted within the waveguide (5) due to a phase shift of at least one of the light beams entering the waveguide (5), such as by phase shifting one or both of the incoming waves into the waveguide (5) or by displacing the mirror (22);
c) performing a Fourier transformation of the detected intensity of the photo signal;
d) receiving the different light intensities (a.u.) as a function of the wavenumbers given in cm⁻¹;
e) and optionally selecting the peak positions and comparing the according wavenumbers to data stored in a data base.

14. Method according to claim 13, **characterized in that** prior to using the component (1) as a spectrometer (2), a reference measurement of the light source is performed to know the absolute light intensity for each wavenumber.

15. Use of the method according to claim 13 or 14 in a mobile device, preferably a hand held device, such as a mobile phone, for analyzing materials and/or ingredients of a composition.
